(19) Europäisches Patentamt
European Patent Office
Office européen des brevets

(11) EP 1 353 554 B1

(12) **EUROPÄISCHE PATENTSCHRIFT**

(45) Veröffentlichungstag und Bekanntmachung des Hinweises auf die Patenterteilung:
**30.06.2004 Patentblatt 2004/27**

(21) Anmeldenummer: **02710012.2**

(22) Anmeldetag: **17.01.2002**

(51) Int Cl.[7]: **A01N 35/04**, A01N 47/24, A01N 43/653

(86) Internationale Anmeldenummer:
**PCT/EP2002/000411**

(87) Internationale Veröffentlichungsnummer:
**WO 2002/056686 (25.07.2002 Gazette 2002/30)**

(54) **FUNGIZIDE MISCHUNGEN**
FUNGICIDAL MIXTURES
MELANGES FONGICIDES

(84) Benannte Vertragsstaaten:
**AT BE CH CY DE DK ES FI FR GB GR IE IT LI LU MC NL PT SE TR**
Benannte Erstreckungsstaaten:
**LT LV RO SI**

(30) Priorität: **18.01.2001 DE 10102279**
**15.05.2001 DE 10123734**

(43) Veröffentlichungstag der Anmeldung:
**22.10.2003 Patentblatt 2003/43**

(73) Patentinhaber: **BASF AKTIENGESELLSCHAFT**
**67056 Ludwigshafen (DE)**

(72) Erfinder:
- **MÜLLER, Bernd**
  **67227 Frankenthal (DE)**
- **ROSE, Ingo**
  **68159 Mannheim (DE)**
- **AMMERMANN, Eberhard**
  **64646 Heppenheim (DE)**
- **STIERL, Reinhard**
  **67251 Freinsheim (DE)**
- **LORENZ, Gisela**
  **67434 Hambach (DE)**
- **STRATHMANN, Siegfried**
  **67117 Limburgerhof (DE)**
- **SCHERER, Maria**
  **76829 Landau (DE)**
- **SCHELBERGER, Klaus**
  **67161 Gönnheim (DE)**
- **LEYENDECKER, Joachim**
  **67454 Hassloch (DE)**
- **HADEN, Egon**
  **67259 Kleinniedesheim (DE)**

(56) Entgegenhaltungen:
**EP-A- 1 023 834**
**WO-A-00/76317**
**WO-A-97/40688**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

EP 1 353 554 B1

## Beschreibung

Die vorliegende Erfindung betrifft fungizide Mischungen, enthaltend

a) ein Benzophenon der Formel I,

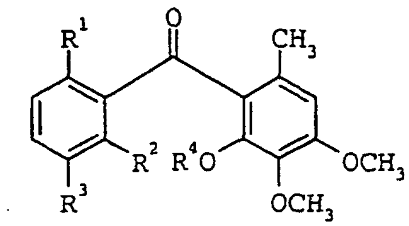

I

in der

$R^1$ für Chlor, Methyl, Methoxy, Acetoxy, Pivaloyloxy oder Hydroxy;
$R^2$ für Chlor oder Methyl;
$R^3$ für Wasserstoff, Halogen oder Methyl; und
$R^4$ für $C_1$-$C_6$-Alkyl oder Benzyl stehen, wobei der Phenylteil des Benzylrestes einen Halogen oder Methylsubstituenten tragen kann, und

b) ein Carbamat der Formel II,

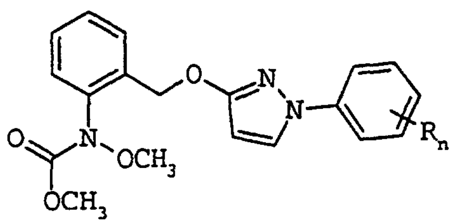

II

in der n für 1 oder 2 steht und R Halogen, $C_1$-$C_4$-Alkyl und $C_1$-$C_2$-Halogenalkyl bedeutet, wobei die Reste R verschieden sein können, wenn n für 2 steht, und

c) ein Azolderivat III ausgewählt aus der Gruppe der Verbindungen III.a bis III.e:

- (2RS,3SR)-1-[3-(2-chlorophenyl)-2-(4-fluorophenyl)oxiran-2-ylmethyl]-1H-1,2,4-triazol

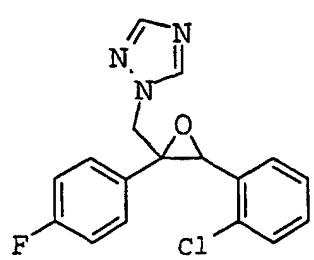

III.a

- (1RS,5RS;1RS,5SR)-5-(4-chlorobenzyl)-2,2-dimethyl-1-(1H-1,2,4-triazol-1-ylmethyl)cyclopentanol

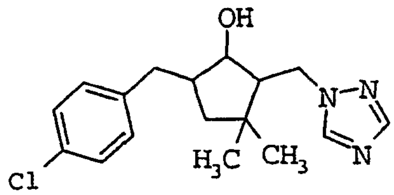

III.b

- (R,S)-1-[2-(2,4-dichlorophenyl)-4-propyl-2,3-dioxolan-2-ylmethyl]-1H-1,2,4-triazol

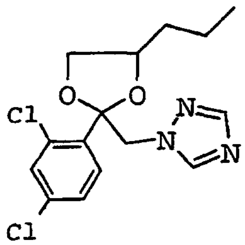

III.c

- (R,S)-1-(4-Chlorophenyl)-4,4-dimethyl-3-(1H-1,2,4-triazol-1-ylmethyl)-pentan-3-ol

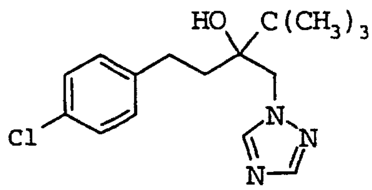

III.d

- (R,S)-1-(2-Chlorophenyl)-2-(1-Chlorcyclopropyl)-3-(5-mercapto-1H-1,2,4-triazolyl)-propan-2-ol

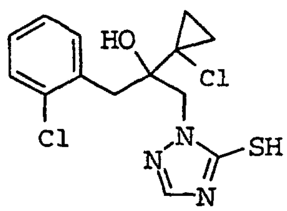

III.e

in einer synergistisch wirksamen Menge.

Außerdem betrifft die Erfindung Verfahren zur Bekämpfung von Schadpilzen mit Mischungen der Verbindungen I, II und III.

Die Verbindungen der Formel I, ihre Herstellung und ihre Wirkung gegen Schadpilze sind aus der Literatur bekannt (EP-A 727 141; EP-A 897 904; EP-A 899 255; EP-A 967 196).

Die Carbamate der Formel II, ihre Herstellung und ihre Wirkung gegen Schadpilze sind bekannt (WO-A 93/15046 und WO-A 96/01256).

Die Azolderivate der Formel III, deren Herstellung und deren Wirkung gegen Schadpilze sind dem Fachmann aus der Literatur bekannt:

IIIa: common name: Epoxiconazol, EP-A 196 038,
CAS RN [106325-08-0];
IIIb: common name: Metconazol, Proc. Br. Crop Prot. Conf.-Pests
Dis., 5-4, 419 (1992), CAS RN [125116-23-6];
IIIc: common name: Propiconazol, GB-A 1,522,657,

CAS RN [60207-90-1];
IIId: common name: Tebuconazol, EP-A 40345,
CAS RN [107534-96-3];
IIIe: DE-A 198 29 075.

Binäre Mischungen von Benzophenonen der Formel I mit Azolderivaten der Formel III sind aus EP-A 1 023 834 bekannt.

Binäre Mischungen enthaltend Carbamate der Formel II und Azolderivate der Formel III sind aus EP-A 900 021 bekannt.

Eine mögliche synergistische Wirkung zwischen den speziell substituierten Benzophenonen der Formel I und Carbamaten der Formel II (s. Tabelle II) wird in WO-A 00/76317 postuliert. Jedoch wird in dieser Schrift die synergistische Wirkung nicht belegt.

Im Hinblick auf eine Senkung der Aufwandmengen und eine Verbesserung des Wirkungsspektrums der bekannten Verbindungen I, II und III sowie der bekannten binären Mischungenlagen der vorliegenden Erfindung Mischungen als Aufgabe zugrunde, die bei verringerter Gesamtmenge an ausgebrachten Wirkstoffen eine weiter verbesserte Wirkung gegen Schadpilzen aufweisen (synergistische Mischungen).

Demgemäß wurde die eingangs definierte Mischung gefunden. Es wurde außerdem gefunden, daß sich bei gleichzeitiger, und zwar gemeinsamer oder getrennter Anwendung der Verbindungen I, II und III oder bei Anwendung der Verbindungen I, II und III nacheinander Schadpilze besser bekämpfen lassen, als mit den Einzelverbindungen oder einer binären Mischung allein.

Die folgenden Verbindungen der Formel I sind als Mischungspartner bevorzugt, wobei die einzelnen Bevorzugungen für sich allein genommen und in Kombination zu lesen sind.

Bevorzugt sind Verbindungen I, in denen $R^1$ für Chlor, Methoxy, Acetoxy oder Hydroxy steht und insbesondere bevorzugt sind Verbindungen, in denen $R^1$ Methoxy, Acetoxy oder Hydroxy bedeutet. Ganz besonders bevorzugt sind Verbindungen, in denen $R^1$ Methoxybedeutet.

Erfindungsgemäß sind Mischungen enthaltend Verbindungen I, in denen $R^2$ Chlor oder Methyl bedeutet. Bevorzugt sind Verbindungen I, in denen $R^2$ Methyl bedeutet.

Außerdem sind Verbindungen I bevorzugt, in denen $R^3$ für Wasserstoff, Methyl, Chlor oder Brom und insbesondere bevorzugt für Wasserstoff, Chlor oder Brom steht.

Daneben sind Verbindungen I bevorzugt, in denen $R^4$ für $C_1$-$C_4$-Alkyl oder Benzyl stehen, wobei der Phenylteil des Benzylrestes einen Halogen oder Methylsubstituenten tragen kann. Insbesondere bevorzugt sind Verbindungen der Formel I, in der $R^4$ für $C_1$-$C_4$-Alkyl und vorzugsweise Methyl steht.

Weiterhin bevorzugt sind Verbindungen der Formel I, in der die Substituenten $R^1$, $R^2$, $R^3$ und $R^4$ die folgende Bedeutung haben:

$R^1$ Methoxy, Acetoxy oder Hydroxy;
$R^2$ Methyl;
$R^3$ Wasserstoff, Chlor oder Brom; und
$R^4$ $C_1$-$C_4$-Alkyl.

Daneben sind Verbindungen der Formel I besonders bevorzugt, in denen die Substituenten die in der folgenden Tabelle gegebenen Bedeutungen haben:

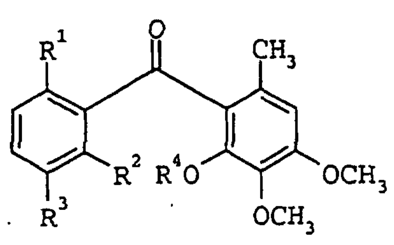

I

Tabelle I

| Nr. | $R^1$ | $R^2$ | $R^3$ | $R^4$ |
|---|---|---|---|---|
| I-1 | Methoxy | Cl | H | Methyl |
| I-2 | Methoxy | Cl | Methyl | Methyl |
| I-3 | Methoxy | Cl | H | n-Propyl |
| I-4 | Methoxy | Cl | H | n-Butyl |
| I-5 | Methoxy | Cl | H | Benzyl |
| I-6 | Methoxy | Cl | H | 2-Fluorobenzyl |
| I-7 | Methoxy | Cl | H | 3-Fluorobenzyl |
| I-8 | Methoxy | Cl | H | 4-Fluorophenyl |
| I-9 | Methoxy | Cl | H | 2-Methylphenyl |
| I-10 | Methoxy | Cl | H | 3-Methylphenyl |
| I-11 | Methoxy | Cl | H | 4-Methylphenyl |
| I-12 | Methoxy | Cl | Br | Methyl |
| I-13 | Methoxy | Cl | Br | n-Propyl |
| I-14 | Methoxy | Cl | Br | n-Butyl |
| I-15 | Methoxy | Cl | Br | Benzyl |
| I-16 | Methoxy | Cl | Br | 2-Fluorobenzyl |
| I-17 | Methoxy | Methyl | H | Methyl |
| I-18 | Methoxy | Methyl | Cl | Methyl |
| I-19 | Methoxy | Methyl | H | n-Propyl |
| I-20 | Methoxy | Methyl | H | n-Butyl |
| I-21 | Methoxy | Methyl | H | Benzyl |
| I-22 | Methoxy | Methyl | H | 2-Fluorobenzyl |
| I-23 | Methoxy | Methyl | H | 3-Fluorobenzyl |
| I-24 | Methoxy | Methyl | H | 4-Fluorophenyl |
| I-25 | Methoxy | Methyl | H | 2-Methylphenyl |
| I-26 | Methoxy | Methyl | H | 3-Methylphenyl |
| I-27 | Methoxy | Methyl | H | 4-Methylphenyl |
| I-28 | Methoxy | Methyl | Br | Methyl |
| I-29 | Methoxy | Methyl | Br | n-Propyl |
| I-30 | Methoxy | Methyl | Br ' | n-Butyl |
| I-31 | Methoxy | Methyl | Br | Benzyl |
| I-32 | Methoxy | Methyl | Br | 2-Fluorobenzyl |
| I-33 | Acetoxy | Methyl | H | Methyl |
| I-34 | Acetoxy | Methyl | Cl | Methyl |
| I-35 | Acetoxy | Methyl | Br | Methyl |
| I-36 | Hydroxy | Methyl | H | Methyl |
| I-37 | Hydroxy | Methyl | Cl | Methyl |
| I-38 | Hydroxy | Methyl | Br | Methyl |

Tabelle I (fortgesetzt)

| Nr. | $R^1$ | $R^2$ | $R^3$ | $R^4$ |
|---|---|---|---|---|
| I-39 | Pivaloyloxy | Methyl | H | Methyl |
| I-40 | Pivaloyloxy | Methyl | Cl | Methyl |
| I-41 | Pivaloyloxy | Methyl | Br | Methyl |
| I-42 | Cl | Cl | H | Methyl |
| I-43 | Cl | Cl | H | n-Propyl |
| I-44 | Cl | Cl | H | n-Butyl |
| I-45 | Cl | Cl | H | Benzyl |
| I-46 | Cl | Cl | H | 2-Fluorobenzyl |
| I-47 | Cl | Cl | H | 3-Fluorobenzyl |
| I-48 | Cl | Cl | H | 4-Fluorophenyl |
| I-49 | Cl | Cl | H | 2-Methylphenyl |
| I-50 | Cl | Cl | H | 3-Methylphenyl |
| I-51 | Cl | Cl | H | 4-Methylphenyl |
| I-52 | Cl | Cl | Br | Methyl |
| I-53 | Cl | Cl | Br | n-Propyl |
| I-54 | Cl | Cl | Br | n-Butyl |
| I-55 | Cl | Cl | Br | Benzyl |
| I-56 | Cl | Cl | Br | 2-Fluorobenzyl |
| I-57 | Methyl | Methyl | H | Methyl |
| I-58 | Methyl | Methyl | H | n-Propyl |
| I-59 | Methyl | Methyl | H | n-Butyl |
| I-60 | Methyl | Methyl | H | Benzyl |
| I-61 | Methyl | Methyl | H | 2-Fluorobenzyl |
| I-62 | Methyl | Methyl | H | 3-Fluorobenzyl |
| I-63 | Methyl | Methyl | H | 4-Fluorophenyl |
| I-64 | Methyl | Methyl | H | 2-Methylphenyl |
| I-65 | Methyl | Methyl | H | 3-Methylphenyl |
| I-66 | Methyl | Methyl | H | 4-Methylphenyl |
| I-67 | Methyl | Methyl | Br | Methyl |
| I-68 | Methyl | Methyl | Br | n-Propyl |
| I-69 | Methyl | Methyl | Br | n-Butyl |
| I-70 | Methyl | Methyl | Br | Benzyl |
| I-71 | Methyl | Methyl | Br | 2-Fluorobenzyl |

Die Formel II-x repräsentiert Carbamate, in denen die Kombination der Substituenten einer Zeile der folgenden Tabelle entspricht:

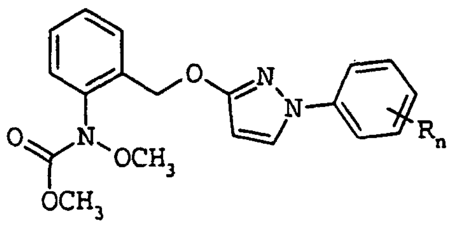

II-x

Tabelle II

| Nr. | $R_n$ |
|---|---|
| II-1 | 2-F |
| II-2 | 3-F |
| II-3 | 4-F |
| II-4 | 2-Cl |
| II-5 | 3-Cl |
| II-6 | 4-Cl |
| II-7 | 2-Br |
| II-8 | 3-Br |
| II-9 | 4-Br |
| II-10 | 2-$CH_3$ |
| II-11 | 3-$CH_3$ |
| II-12 | 4-$CH_3$ |
| II-13 | 2-$CF_3$ |
| II-14 | 3-$CF_3$ |
| II-15 | 4-$CF_3$ |
| II-16 | 2,4-$F_2$ |
| II-17 | 2,4-$Cl_2$ |
| II-18 | 3,4-$Cl_2$ |
| II-19 | 2-Cl, 4-$CH_3$ |
| II-20 | 3-Cl, 4-$CH_3$ |

Bevorzugt werden als Komponente b) Verbindungen der Formel II, in der R für Fluor, Chlor, Methyl oder Trifluormethyl steht.

Gleichermaßen besonders bevorzugt sind Verbindungen der Formel II, in der R in para-Stellung steht; diese Verbindungen werden durch die Formel IIa beschrieben:

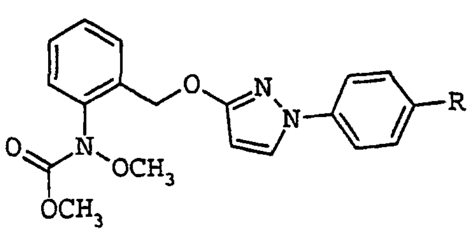

IIa

Bevorzugt sind fungizide Mischungen die als Komponente a) eine der Verbindungen: I-33, I-35, I-42, I-44, I-46, I-60 oder vorzugsweise I-18, I-28, I-37, als Komponente b) eine der Verbindungen: II-3, II-12, II-17 oder vorzugsweise II-6 und als Komponente c) Verbindungen III-a enthalten.

Die Verbindungen II sind wegen des basischen Charakters der in ihnen enthaltenden Stickstoffatome in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, Kohlensäure, Schwefelsäure, Phosphorsäure und Salpetersäure.

Als organischen Säuren kommen beispielsweise Ameisensäure, Kohlensäure und Alkansäuren wie Essigsäure, Trifluoressigsäure, Trichloressigsäure und Propionsäure sowie Glycolsäure, Milchsäure, Bernsteinsäure, Zitronensäure, Benzoesäure, Zimtsäure, Oxalsäure, p-Toluolsulfonsäure, Salizylsäure, p-Aminosalizylsäure, 2-Phenoxybenzoesäure oder 2-Acetoxybenzoesäure.

Als Metallionen kommen insbesondere die Ionen der Elemente der ersten bis achten Nebengruppe, vor allem Chrom, Mangan, Eisen, Kobalt, Nickel, Kupfer, Zink und daneben der zweiten Hauptgruppe, vor allem Calcium und Magnesium, der dritten und vierten Hauptgruppe, insbesondere Aluminium, Zinn und Blei in Betracht. Die Metalle können dabei gegebenenfalls in verschiedenen ihnen zukommenden Wertigkeiten vorliegen.

Bevorzugt setzt man bei der Bereitstellung der Mischungen die reinen Wirkstoffe I, II und III ein, denen man weitere Wirkstoffe gegen Schadpilze oder gegen andere Schädlinge wie Insekten, Spinntiere oder Nematoden oder auch herbizide oder wachstumsregulierende Wirkstoffe oder Düngemittel beimischen kann.

Die Mischungen aus den Verbindungen I, II und III bzw. die Verbindungen I, II und III gleichzeitig, gemeinsam oder getrennt angewandt, zeichnen sich durch eine hervorragende Wirkung gegen ein breites Spektrum von pflanzenpathogenen Pilzen, insbesondere aus der Klasse der Ascomyceten, Basidiomyceten, Phycomyceten und Deuteromyceten aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen, Tomaten, Kartoffeln und Kürbisgewächse), Gerste, Gras, Hafer, Bananen, Kaffee, Mais, Obstpflanzen, Reis, Roggen, Soja, Wein, Weizen, Zierpflanzen, Zuckerrohr sowie an einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zukkerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Pseudoperonospora-Arten in Hopfen und Gurken, Alternaria-Arten an Gemüse und Obst, Mycosphaerella-Arten in Bananen sowie Fusarium- und Verticillium-Arten.

Sie sind außerdem im Materialschutz (z.B. Holzschutz) anwendbar, beispielsweise gegen Paecilomyces variotii.

Die Verbindungen I, II und III können gleichzeitig, und zwar gemeinsam oder getrennt, oder nacheinander aufgebracht werden, wobei die Reihenfolge bei getrennter Applikation im allgemeinen keine Auswirkung auf den Bekämpfungserfolg hat.

In den Mischungen werden die Verbindungen I, II und III derart eingesetzt, daß die jeweiligen Mischungsverhältnisse der Verbindungen I und II, I und III, sowie II und III jeweils 20:1 bis 1:20 und insbesondere 10:1 bis 1:10 betragen.

Die Aufwandmengen der erfindungsgemäßen Mischungen liegen, vor allem bei landwirtschaftlichen Kulturflächen, je nach Art des gewünschten Effekts bei 0,01 bis 8 kg/ha, vorzugsweise 0,1 bis 5 kg/ha, insbesondere 0,1 bis 3,0 kg/ha.

Die Aufwandmengen liegen dabei für die Verbindungen I bei 0,005 bis 5 kg/ha, vorzugsweise 0,08 bis 3 kg/ha, insbesondere 0,06 bis 2,0 kg/ha.

Die Aufwandmengen für die Verbindungen II liegen entsprechend bei 0,005 bis 3 kg/ha, vorzugsweise 0,02 bis 2 kg/ha, insbesondere 0,04 bis 1,0 kg/ha.

Für die Verbindungen III liegen die Aufwandmengen entsprechend bei 0,01 bis 2 kg/ha und vorzugsweise bei 0,05 bis 1 kg/ha.

Bei der Saatgutbehandlung werden im allgemeinen Aufwandmengen an Mischung von 0,001 bis 250 g/kg Saatgut, vorzugsweise 0,01 bis 100 g/kg, insbesondere 0,01 bis 50 g/kg verwendet.

Sofern für Pflanzen pathogene Schadpilze zu bekämpfen sind, erfolgt die getrennte oder gemeinsame Applikation der Verbindungen I, II und gegebenenfalls III oder der Mischungen aus den Verbindungen I, II und gegebenenfalls III durch Besprühen oder Bestäuben der Samen, der Pflanzen oder der Böden vor oder nach der Aussaat der

Pflanzen oder vor oder nach dem Auflaufen der Pflanzen.

Die erfindungsgemäßen fungiziden synergistischen Mischungen bzw. die Verbindungen I, II und gegebenenfalls III können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Lauryletherund Fettalkoholsulfaten, sowie Salze sulfatierter Hexa-, Heptaund Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver, Streu- und Stäubemittel können durch Mischen oder gemeinsames Vermahlen der Verbindungen I, II oder III oder der Mischung aus den Verbindungen I, II und III mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I oder II bzw. der Mischung aus den Verbindungen I, II und gegebenenfalls III. Die Wirkstoffe werden dabei in einer Reinheit von 90% bis 100%, vorzugsweise 95% bis 100% (nach NMR- oder HPLC-Spektrum) eingesetzt.

Die Anwendung der Verbindungen I, II und III, der Mischungen oder der entsprechenden Formulierungen erfolgt so, daß man die Schadpilze, deren Lebensraum oder die von ihnen freizuhaltenden Pflanzen, Samen, Böden, Flächen, Materialien oder Räume mit einer fungizid wirksamen Menge der Mischung, bzw. der Verbindungen I, II und III bei getrennter Ausbringung, behandelt.

Die Anwendung kann vor oder nach dem Befall durch die Schadpilze erfolgen.

Anwendungsbeispiel

Die synergistische Wirkung der erfindungsgemäßen Mischungen ließ sich durch die folgenden Versuche zeigen:

Die Wirkstoffe wurden getrennt oder gemeinsam als 10%ige Emulsion in einem Gemisch aus 63 Gew.-% Cyclohexanon und 27 Gew.-% Emulgator aufbereitet und entsprechend der gewünschten Konzentration mit Wasser verdünnt.

Die Auswertung erfolgte durch Feststellung der befallenen Blattflächen in Prozent. Diese Prozent-Werte wurden in Wirkungsgrade umgerechnet. Der Wirkungsgrad (W) wurde nach der Formel von Abbot wie folgt bestimmt:

$$W = (1 - \alpha) \cdot 100/\beta$$

$\alpha$ entspricht dem Pilzbefall der behandelten Pflanzen in % und

$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.

Die zu erwartenden Wirkungsgrade der Wirkstoffmischungen wurden nach der Colby Formel [R.S. Colby, Weeds 15, 20-22 (1967)] ermittelt und mit den beobachteten Wirkungsgraden verglichen.

Colby Formel: $E = x + y - x \cdot y/100$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Anwendungsbeispiel 1:

Protektive Wirksamkeit gegen Weizenmehltau verursacht durch *Erysiphe [syn. Blumeria] graminis* forma specialis *tritici*

Blätter von in Töpfen gewachsenen Weizenkeimlingen der Sorte "Kanzler" wurden mit wäßriger Wirkstoffaufbereitung, die aus einer Stammlösung bestehend aus 10 % Wirkstoff, 85 % Cyclohexanon und 5 % Emulgiermittel angesetzt wurde, bis zur Tropfnässe besprüht und 24 Stunden nach dem Antrocknen des Spritzbelages mit Sporen des Weizenmehltaus (*Erysiphe [syn. Blumeria] graminis* forma specialis. tritici) bestäubt. Die Versuchspflanzen wurden anschließend im Gewächshaus bei Temperaturen zwischen 20 und 24°C und 60 bis 90 % relativer Luftfeuchtigkeit aufgestellt. Nach 7 Tagen wurde das Ausmaß der Mehltauentwicklung visuell in % Befall der gesamten Blattfläche ermittelt.

Die visuell ermittelten Werte für den Prozentanteil befallener Blattflächen wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgraden verglichen.

Tabelle 1

| Wirkstoff | Wirkstoffkonzentration in der Spritzbrühe in ppm | Wirkungsgrad in % der unbehandelten Kontrolle |
|---|---|---|
| Kontrolle (unbehandelt) | (94 % Befall) | 0 |
| Verbindung I-28 | 0,25<br>0.125<br>0,06 | 79<br>57<br>36 |
| Verbindung I-37 | 0,25<br>0.125<br>0,06 | 79<br>57<br>36 |
| Verbindung II-6<br>= Pyraclostrobin | 2,5<br>1,25<br>0,6 | 57<br>47<br>36 |
| Verbindung II-12 | 2,5<br>1,25<br>0,6 | 57<br>25<br>25 |
| Verbindung III.a<br>= Epoxiconazol | 1,25<br>0,6<br>0,3 | 4<br>4<br>4 |

| Zweier-Mischungen | | |
|---|---|---|
| binäre Kombinationen | beoachteter Wirkungsgrad | Berechneter Wirkungsgrad*) |
| Verbindung I-28<br>+ Verbindung II-6<br>0,125 + 1,25 ppm<br>(1 : 10)<br>= **Mischung A** | 89 | |
| Verbindung I-28<br>+ Verbindung II-6<br>0,06 + 0,6 ppm<br>(1 : 10)<br>= **Mischung B** | 79 | |
| Verbindung I-28<br>+ Verbindung II-6<br>0,125 + 0,6 ppm<br>(1 : 5)<br>= **Mischung C** | 89 | |
| Verbindung I-28<br>+ Verbindung II-6<br>0,25 + 1,25 ppm<br>(1 : 5)<br>= **Mischung D** | 89 | |
| Verbindung I-28<br>+ Verbindung II-12<br>0,125 + 1,25 ppm<br>(1 : 10)<br>= **Mischung E** | 84 | |
| Verbindung I-28<br>+ Verbindung II-12<br>0,06 + 0,6 ppm<br>(1 : 10)<br>= **Mischung F** | 79 | |
| Verbindung I-28<br>+ Verbindung II-12<br>0,25 + 1,25 ppm<br>(1 : 5)<br>= **Mischung G** | 84 | |
| Verbindung I-28<br>+ Verbindung II-12<br>0,125 + 0,6 ppm<br>(1 : 5)<br>= **Mischung H** | 89 | |
| Verbindung I-37<br>+ Verbindung II-6<br>0,125 + 1,25 ppm<br>(1 : 10)<br>= **Mischung I** | 89 | |

(fortgesetzt)

| | | |
|---|---|---|
| Verbindung I-37<br>+ Verbindung II-6<br>0,06 + 0,6 ppm<br>(1 : 10)<br>= **Mischung J** | 79 | |
| Verbindung I-37<br>+ Verbindung II-6<br>0,25 + 1,25 ppm<br>(1 : 5)<br>= **Mischung K** | 89 | |
| Verbindung I-37<br>+ Verbindung II-6<br>0,125 + 0,6 ppm<br>(1 : 5)<br>= **Mischung L** | 79 | |
| Verbindung I-37<br>+ Verbindung II-12<br>0,125 + 1,25 ppm<br>(1 : 10)<br>= **Mischung M** | 84 | |
| Verbindung I-37<br>+ Verbindung II-12<br>0,06 + 0,6 ppm<br>(1 : 10)<br>= **Mischung N** | 73 | |
| Verbindung I-37<br>+ Verbindung II-12<br>0,25 + 1,25 ppm<br>(1 : 5 )<br>= **Mischung O** | 89 | |
| Verbindung I-37<br>+ Verbindung II-12<br>0,125 + 0,6 ppm<br>(1 : 5)<br>= **Mischung P** | 84 | |

Tabelle 2

| Dreier-Mischungen | | |
|---|---|---|
| Erfindungsgemäße Ternäre Kombinationen | beobachteter Wirkungsgrad | Berechneter Wirkungsgrad*) |
| Verbindung I-28<br>+ Verbindung II-6<br>+ Verbindung III.a<br>0,125 + 1,25 + 1,25 ppm<br>(1 : 10 : 10)<br>**Mischung A** + 1,25 ppm<br>III.a | 100 | 90 |

*) berechnet nach der Colby-Formel

Tabelle 2 (fortgesetzt)

| Dreier-Mischungen | | |
|---|---|---|
| Erfindungsgemäße Ternäre Kombinationen | beobachteter Wirkungsgrad | Berechneter Wirkungsgrad*) |
| Verbindung I-28<br>+ Verbindung II-6<br>+ Verbindung III.a<br>0,06 + 0,6 + 0,6 ppm<br>(1 : 10 : 10)<br>**Mischung B** + 0,6 ppm<br>III.a | 97 | 80 |
| Verbindung I-28<br>+ Verbindung II-6<br>+ Verbindung III.a<br>0,125 + 0,6 + 0,6 ppm<br>(1 : 5 : 5)<br>**Mischung C** + 0,6 ppm<br>III.a | 100 | 89 |
| Verbindung I-28<br>+ Verbindung II-6<br>+ Verbindung III.a<br>0,125 + 0,6 + 0,3 ppm<br>(1 : 5 : 2,5)<br>**Mischung C** + 0,3 ppm<br>III.a | 97 | 90 |
| Verbindung I-28<br>+ Verbindung II-6<br>+ Verbindung III.a<br>0,25 + 1,25 + 1,25 ppm<br>(1 : 5 : 5)<br>**Mischung D** + 1,25 ppm<br>III.a | 100 | 90 |
| Verbindung I-28<br>+ Verbindung II-12<br>+ Verbindung III.a<br>0,125 + 1,25 + 1,25 ppm<br>(1 : 10 : 10)<br>**Mischung E** + 1,25 ppm<br>III.a | 100 | 85 |
| Verbindung I-28<br>+ Verbindung II-12<br>+ Verbindung III.a<br>0,06 + 0,6 + 0,6 ppm<br>(1 : 10 : 10)<br>**Mischung F** + 0,6 ppm<br>III.a | 89 | 80 |
| Verbindung I-28<br>+ Verbindung II-12<br>+ Verbindung III.a<br>0,25 + 1,25 + 1,25 ppm<br>(1 : 5 : 5)<br>**Mischung G** + 1,25 ppm<br>III.a | 100 | 85 |

*) berechnet nach der Colby-Formel

Tabelle 2 (fortgesetzt)

| Dreier-Mischungen | | |
|---|---|---|
| Erfindungsgemäße Ternäre Kombinationen | beobachteter Wirkungsgrad | Berechneter Wirkungsgrad*) |
| Verbindung I-28<br>+ Verbindung II-12<br>+ Verbindung III.a<br>0,25 + 1,25 + 0,6 ppm<br>(1 : 5 : 2,4)<br>**Mischung G** + 0,6 ppm<br>III.a | 100 | 85 |
| Verbindung I-28<br>+ Verbindung II-12<br>+ Verbindung III.a<br>0,125 + 0,6 + 0,6 ppm<br>(1 : 5 : 5)<br>**Mischung H** + 0,6 ppm<br>III.a | 100 | 89 |
| Verbindung I-37<br>+ Verbindung II-6<br>+ Verbindung III.a<br>0,125 + 1,25 + 1,25 ppm<br>(1 : 10 : 10)<br>**Mischung I** + 1,25 ppm<br>III.a | 100 | 90 |
| Verbindung I-37<br>+ Verbindung II-6<br>+ Verbindung III.a<br>0,06 + 0,6 + 0,6 ppm<br>(1 : 10 : 10)<br>**Mischung J** + 0,6 ppm<br>III.a | 93 | 80 |
| Verbindung I-37<br>+ Verbindung II-6<br>+ Verbindung III.a<br>0,25 + 1,25 + 1,25 ppm<br>(1 : 5 : 5)<br>**Mischung K** + 1,25 ppm<br>III.a | 100 | 90 |
| Verbindung I-37<br>+ Verbindung II-6<br>+ Verbindung III.a<br>0,25 + 1,25 + 0,6 ppm<br>(1 : 5 : 2,5)<br>**Mischung K** + 0,6 ppm<br>III.a | 100 | 90 |
| Verbindung I-37<br>+ Verbindung II-6<br>+ Verbindung III.a 0,125 + 0,6 + 0,6 ppm<br>(1 : 5 : 5)<br>**Mischung L** + 0,6 ppm<br>III.a | 100 | 79 |

*) berechnet nach der Colby-Formel

Tabelle 2 (fortgesetzt)

| Dreier-Mischungen | | |
|---|---|---|
| Erfindungsgemäße Ternäre Kombinationen | beobachteter Wirkungsgrad | Berechneter Wirkungsgrad*) |
| Verbindung I-37<br>+ Verbindung II-6<br>+ Verbindung III.a<br>0,125 + 0,6 + 0,3 ppm<br>(1 : 5 : 2,5)<br>**Mischung L** + 0,3 ppm<br>III.a | 97 | 80 |
| Verbindung I-37<br>+ Verbindung II-12<br>+ Verbindung III.a<br>0,125 + 1,25 + 1,25 ppm<br>(1 : 10 : 10)<br>**Mischung M** + 1,25 ppm<br>III.a | 100 | 85 |
| Verbindung I-37<br>+ Verbindung II-12<br>+ Verbindung III.a<br>0,06 + 0,6 + 0,6 ppm<br>(1 : 5 : 5)<br>**Mischung N** + 0, 6 ppm<br>III.a | 88 | 74 |
| Verbindung I-37<br>+ Verbindung II-12<br>+ Verbindung III.a<br>0,25 + 1,25 + 1,25 ppm<br>(1 : 5 : 5)<br>**Mischung O** + 1,25 ppm<br>III.a | 100 | 90 |
| Verbindung I-37<br>+ Verbindung II-12<br>+ Verbindung III.a<br>0,25 + 1,25 + 0,6 ppm<br>(1 : 5 : 2,5)<br>**Mischung O** + 0,6 ppm<br>III.a | 100 | 90 |
| Verbindung I-37<br>+ Verbindung II-12<br>+ Verbindung III.a<br>0,125 + 0,6 + 0,6 ppm<br>(1 : 5 : 5)<br>**Mischung P** + 0,6 ppm<br>III.a | 100 | 84 |
| Verbindung I-37<br>+ Verbindung II-12<br>+ Verbindung III.a<br>0,125 + 0,6 + 0,3 ppm<br>(1 : 5 : 2,5)<br>**Mischung P** + 0,3 ppm<br>III.a | 97 | 85 |

*) berechnet nach der Colby-Formel

Aus den Ergebnissen des Versuches geht hervor, daß der beobachteter Wirkungsgrad für die Dreiermischungen (ternären Mischungen) höher ist, als der nach der Colby-Formel vorausberechnete Wirkungsgrad für die Zweiermischungen (binären Mischungen) (aus Synerg 167B. XLS).

## Patentansprüche

1. Fungizide Mischungen, enthaltend

a) ein Benzophenon der Formel I,

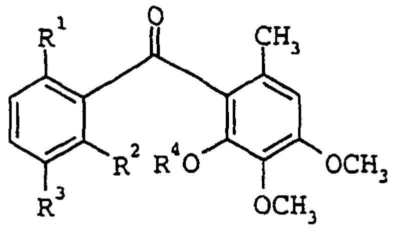

I

in der

$R^1$ für Chlor, Methyl, Methoxy, Acetoxy, Pivaloyloxy oder Hydroxy;
$R^2$ für Chlor oder Methyl;
$R^3$ für Wasserstoff, Halogen oder Methyl; und
$R^4$ für $C_1$-$C_6$-Alkyl oder Benzyl stehen, wobei der Phenylteil des Benzylrestes einen Halogen oder Methylsubstituenten tragen kann, und

b) ein Carbamat der Formel II,

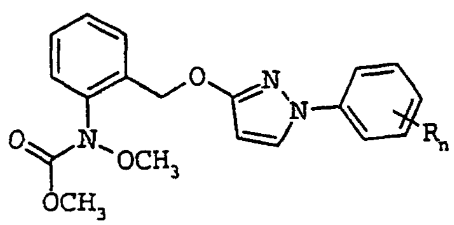

II

in der n für 1 oder 2 steht und R Halogen, $C_1$-$C_4$-Alkyl und $C_1$-$C_2$-Halogenalkyl bedeutet, wobei die Reste R verschieden sein können, wenn n für 2 steht, und

c) ein Azolderivat III ausgewählt aus der Gruppe der Verbindungen III.a bis III.e:

- (2RS,3SR)-1-(3-(2-chlorophenyl)-2-(4-fluorophenyl)oxiran-2-ylmethyl]-1H-1,2,4-triazol

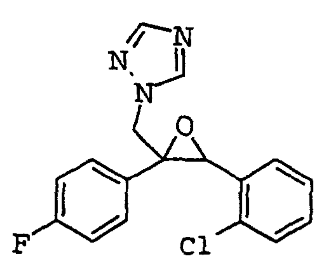

III.a

- (1RS,5RS;1RS,5SR)-5-(4-chlorobenzyl)-2,2-dimethyl-1-(1H-1,2,4-triazol-1-ylmethyl)cyclopentanol

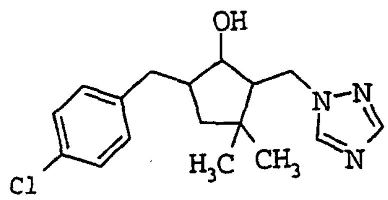

III.b

- (R,S)-1-[2-(2,4-dichlorophenyl)-4-propyl-1,3-dioxolan-2-ylmethyl]-1H-1,2,4-triazol

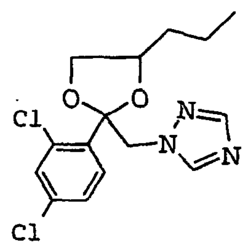

III.c

- (R,S)-1-(4-Chlorophenyl)-4,4-dimethyl-3-(1H-1,2,4-triazol-1-ylmethyl)-pentan-3-ol

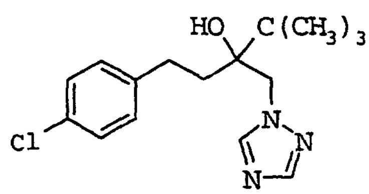

III.d

- (R,S)-1-(2-Chlorophenyl)-2-(1-Chlorcyclopropyl)-3-(5-mercapto-1H-1,2,4-triazolyl)-propan-2-ol

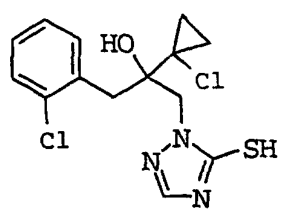

III.e

in einer synergistisch wirksamen Menge.

**2.** Fungizide Mischungen nach Anspruch 1, wobei in Formel I

$R^1$ für Methoxy, Acetoxy oder Hydroxy;
$R^2$ für Methyl;
$R^3$ für Wasserstoff, Chlor oder Brom; und
$R^4$ für $C_1$-$C_4$-Alkyl steht.

**3.** Fungizide Mischung nach Anspruch 1, wobei das Carbamat II der Formel IIa,

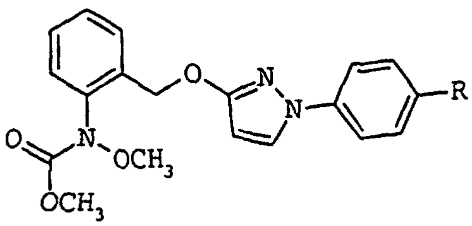

IIa

in der R für Fluor, Chlor oder Methyl steht, entspricht.

**4.** Fungizide Mischung nach Anspruch 1, wobei das Azolderivat III.a eingesetzt wird.

**5.** Fungizide Mischung nach Anspruch 1 **dadurch gekennzeichnet, daß** das Gewichtsverhältnis der Verbindungen I und II, I und III, sowie II und III jeweils 20:1 bis 1:20 beträgt.

**6.** Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit einer fungiziden Mischung gemäß Anspruch 1 behandelt.

**7.** Verfahren nach Anspruch 6, **dadurch gekennzeichnet, daß** man die Benzophenone der Formel I gemäß Anspruch 1 in einer Menge von 0,08 bis 3 kg/ha aufwendet.

**8.** Verfahren nach den Ansprüchen 6 oder 7, **dadurch gekennzeichnet, daß** man die Carbamate der Formel II gemäß Anspruch 1 in einer Menge von 0,02 bis 2 kg/ha aufwendet.

**9.** Verfahren nach den Ansprüchen 6 bis 8, **dadurch gekennzeichnet,.daß** man die Azolderivate der Formel III gemäß Anspruch 1 in einer Menge von 0,01 bis 2 kg/ha aufwendet.

## Claims

**1.** A fungicidal mixture, comprising

a) a benzophenone of the formula I,

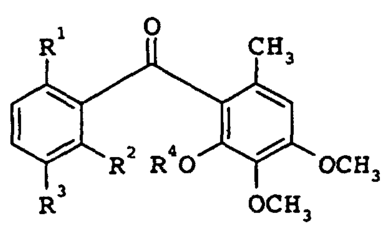

I

in which

$R^1$ is chlorine, methyl, methoxy, acetoxy, pivaloyloxy or hydroxyl;
$R^2$ is chlorine or methyl;
$R^3$ is hydrogen, halogen or methyl; and
$R^4$ is $C_1$-$C_6$-alkyl or benzyl, where the phenyl moiety of the benzyl radical may carry a halogen or methyl substituent, and

b) a carbamate of the formula II,

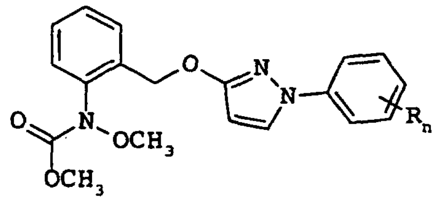

II

in which n is 1 or 2 and R is halogen, $C_1$-$C_4$-alkyl or $C_1$-$C_2$-haloalkyl, where the radicals R may be different if n is 2, and

c) an azole derivative III selected from the group of the compounds III.a to III.e:

- (2RS,3SR)-1-[3-(2-chlorophenyl)-2-(4-fluorophenyl)-oxiran-2-ylmethyl]-1H-1,2,4-triazole

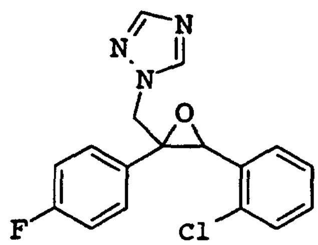

III.a

- (1RS,5RS;1RS,5SR)-5-(4-chlorobenzyl)-2,2-dimethyl-1-(1H-1,2,4-triazol-1-ylmethyl)cyclopentanol

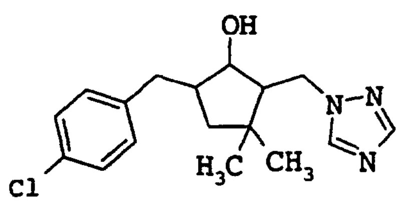

III.b

- (R,S)-1-[2-(2,4-dichlorophenyl)-4-propyl-1,3-dioxolan-2-ylmethyl]-1H-1,2,4-triazole

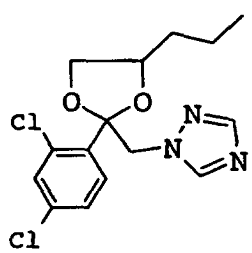

III.c

- (R,S)-1-(4-chlorophenyl)-4,4-dimethyl-3-(1H-1,2,4-triazol-1-ylmethyl)pentan-3-ol

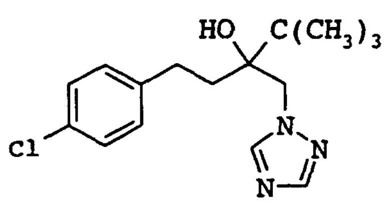

III.d

- (R,S)-1-(2-chlorophenyl)-2-(1-chlorocyclopropyl)-3-(5-mercapto-1H-1,2,4-triazolyl)propan-2-ol

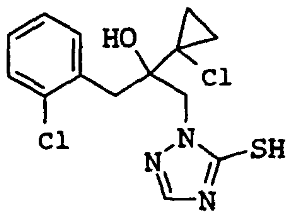

III.e

in a synergistically effective amount.

**2.** A fungicidal mixture as claimed in claim 1, where in formula I

$R^1$ is methoxy, acetoxy or hydroxyl;
$R^2$ is methyl;
$R^3$ is hydrogen, chlorine or bromine; and
$R^4$ is $C_1$-$C_4$-alkyl.

**3.** A fungicidal mixture as claimed in claim 1, where the carbamate II corresponds to formula IIa,

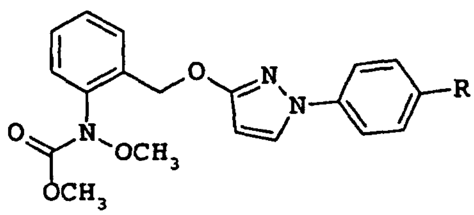

IIa

in which R is fluorine, chlorine or methyl.

**4.** A fungicidal mixture as claimed in claim 1, where the azole derivative III.a is used.

**5.** A fungicidal mixture as claimed in claim 1, wherein the weight ratio of the compounds I and II, I and III and II and III is in each case from 20:1 to 1:20.

**6.** A method for controlling harmful fungi, which comprises treating the harmful fungi, their habitat or the plants, seeds, soils, areas, materials or spaces to be kept free from them with a fungicidal mixture as claimed in claim 1.

**7.** A method as claimed in claim 6, wherein the benzophenones of the formula I as set forth in claim 1 are applied in an amount of from 0.08 to 3 kg/ha.

**8.** A method as claimed in claim 6 or 7, wherein the carbamates of the formula II as set forth in claim 1 are applied in an amount of from 0.02 to 2 kg/ha.

**9.** A method as claimed in any of claims 6 to 8, wherein the azole derivatives of the formula III as set forth in claim 1 are applied in an amount of from 0.01 to 2 kg/ha.

**Revendications**

**1.** Mélanges fongicides, contenant

a) une benzophénone de formule I,

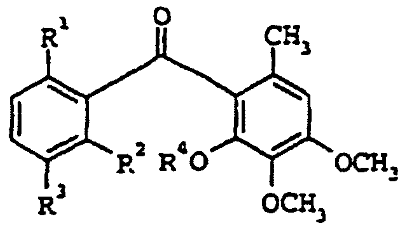

I

dans laquelle

$R^1$ représente un atome de chlore, un groupe méthyle, un groupe méthoxy, un groupe acétoxy, un groupe pivaloyloxy ou un groupe hydroxy ;
$R^2$ représente un atome de chlore ou un groupe méthyle ;
$R^3$ représente un atome d'hydrogène, un atome d'halogène ou un groupe méthyle ; et
$R^4$ représente un groupe alkyle en $C_1$ à $C_6$ ou un groupe benzyle, la partie phényle du radical benzyle pouvant porter un atome d'halogène ou un substituant méthyle, et

b) un carbamate de formule II,

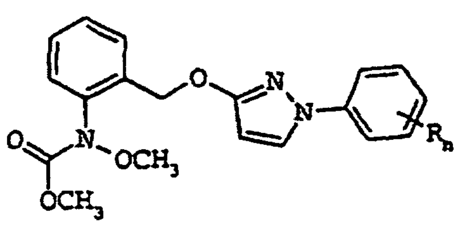

II

dans laquelle n représente 1 ou 2 et R représente un atome d'halogène, un groupe alkyle en $C_1$ à $C_4$ et un groupe halogénoalkyle en $C_1$ à $C_2$, les radicaux R pouvant être différents lorsque n représente 2, et

c) un dérivé azole III choisi dans le groupe des composés III.a à III.e:

- (2RS,3SR)-1-[3-(2-chlorophényl)-2-(4-fluorophényl)oxirann-2-ylméthyl]-1H-1,2,4-triazole

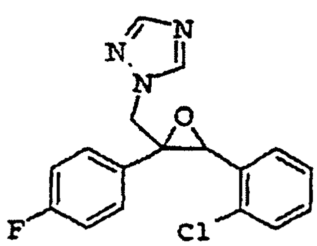

III.a

- (1RS,5RS;1RS,5SR)-5-(4-chlorobenzyl)-2,2-diméthyl-1-(1H-1,2,4-triazol-1-ylméthyl)cyclopentanol

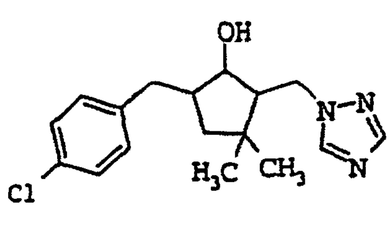

III.b

- (R,S)-1-[2-(2,4-dichlorophényl)-4-propyl-1,3-dioxolann-2-ylméthyl]-1 H-1,2,4-triazole

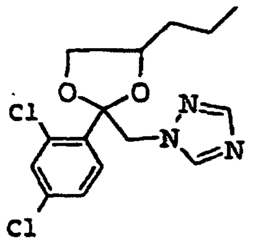

III.c

- (R,S)-1-(4-chlorophényl)-4,4-diméthyl-3-(1H-1,2,4-triazol-1-ylméthyl)-pentan-3-ol

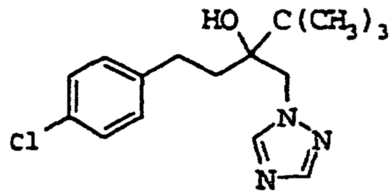

III.d

- (R,S)-1-(2-chlorophényl)-2-(1-chlorocyclopropyl)-3-(5-mercapto-1H-1,2,4-triazolyl)-propan-2-ol

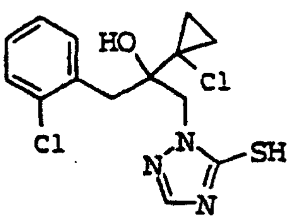

III.e

en une quantité synergiquement efficace.

**2.** Mélanges fongicides selon la revendication 1, où, dans la formule I
$R^1$ représente un groupe méthoxy, un groupe acétoxy ou un groupe hydroxy ;
$R^2$ représente un groupe méthyle ;
$R^3$ représente un atome d'hydrogène, un atome de chlore ou un atome de brome ; et
$R^4$ représente un groupe alkyle en $C_1$ à $C_4$.

**3.** Mélange fongicide selon la revendication 1, dans lequel le carbamate II correspond à la formule IIa

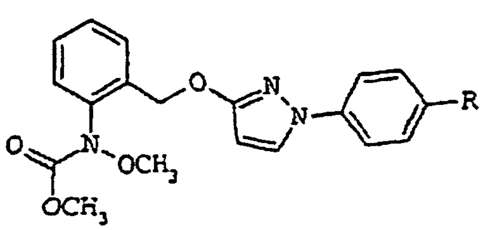

IIa

dans laquelle R représente un atome de fluor, un atome de chlore ou un groupe méthyle.

**4.** Mélange fongicide selon la revendication 1, le dérivé azole III.a étant utilisé.

5. Mélange fongicide selon la revendication 1, **caractérisé en ce que** le rapport pondéral des composés I et II, I et III ainsi que II et III est à chaque fois 20:1 à 1:20.

6. Procédé pour lutter contre des champignons nuisibles, **caractérisé en ce qu'**on traite les champignons nuisibles, leur espace de vie ou les plantes, les graines, les sols, les surfaces, les matériaux ou les espaces qui doivent être maintenus exempts desdits champignons nuisibles avec un mélange fongicide selon la revendication 1.

7. Procédé selon la revendication 6, **caractérisé en ce que** qu'on utilise les benzophénones de formule I selon la revendication 1 en une quantité de 0,08 à 3 kg/ha.

8. Procédé selon les revendications 6 ou 7, **caractérisé en ce qu'**on utilise les carbamates de formule II selon la revendication 1 en une quantité de 0,02 à 2 kg/ha.

9. Procédé selon les revendications 6 à 8, **caractérisé en ce qu'**on utilise les dérivés azole de formule III selon la revendication 1 en une quantité de 0,01 à 2 kg/ha.